# EUROPEAN PATENT APPLICATION

(11) **EP 4 235 363 A1**
(43) Date of publication of application: **30.08.2023**
(21) Application number: 21903780.1
(22) Date of filing: 06.12.2021
(51) Int. Cl.: G06F 3/01, G06F 1/16, G06F 3/00, G06F 3/0484

(54) **ELECTRONIC DEVICE COMPRISING FLEXIBLE DISPLAY, OPERATING METHOD THEREFOR, AND STORAGE MEDIUM**

(30) Priority: 09.12.2020 KR 20200171185
(71) Applicant: Samsung Electronics Co., Ltd., Suwon-si, Gyeonggi-do 16677 (KR)
(72) Inventor: JUNG, Hyunsuk, Suwon-si Gyeonggi-do 16677 (KR); CHOI, Sungyun, Suwon-si Gyeonggi-do 16677 (KR)
(74) Representative: Nederlandsch Octrooibureau
(86) International application number: PCT/KR2021/018372
(87) International publication number: WO 2022/124734

(57) **Abstract**

An electronic device, according to various embodiments, comprises: a housing having a first housing and a second housing which rotate relative to each other about a hinge structure; a flexible display including a first display area and a second display area which are divided by the first housing and the second housing configured to be overlapped with each other; and a processor provided inside the housing, wherein the processor may be configured to: obtain a folded angle of the flexible display in a state in which the flexible display is at least partially folded; and adjust the luminance of at least one of the first display area and the second display area based on the folded angle of the flexible display and user's eye position information. Various other embodiments may be provided.

## Description

### [Technical Field]

Various embodiments relate to an electronic device including a flexible display, an operation method thereof, and a storage medium.

### [Background Art]

With the progress of electronic technologies, various types of flexible electronic devices are being developed. Such flexible electronic devices secure portability even with a larger display. For example, a flexible electronic device may provide a display having a shape transformable by a user's force, that is, a foldable, bendable, or rollable display.

When a user enjoys web surfing or uses multimedia functions, it may be more convenient to use an electronic device having a larger screen for outputting. A larger display may be mounted in an electronic device to output a larger screen. However, in consideration of portability of the electronic device, there may be a limit to expansion of the display size. In an embodiment, a display using organic light emitting diodes may not only provide a larger screen but also secure portability of the electronic device. For example, a display using organic light emitting diodes (or an electronic device including same) is able to implement a stable operation even with a considerably thin thickness, and thus may be mounted in the electronic device in a foldable or bendable, slidable, or rollable manner.

### [Detailed Description of the Invention]

### [Technical Problem]

In an electronic device including a foldable flexible display, a screen may be displayed on a display (or a display region) having various sizes (or various resolutions). For example, when the electronic device is inwardly folded in half and erected, a user is able to look at the screen without holding same. In this case, when ambient illuminance changes, the luminance of the display may change automatically or may be changed by a user in consideration of visibility. However, measurement and calculation of the luminance of the display are made based on an unfolded state. Therefore, in an intermediate state where the display is folded in half, a luminance difference recognized by a user may occur due to the difference between a view angle for an upper display part and a view angle for a lower display part. This may degrade a seamless user experience.

Therefore, the disclosure may provide an electronic device including a flexible display, an operation method thereof, and a storage medium, which may increase visibility in consideration of a user's eye position and a folding angle in an intermediate state where the electronic device is folded in half.

Various embodiments disclosed herein may provide an electronic device including a flexible display, capable of increasing visibility by applying different driving voltages to regions based on a folding axis of the flexible display, an operation method thereof, and a storage medium.

### [Technical Solution]

According to various embodiments, an electronic device may include a housing including a first housing and a second housing configured to rotate about a hinge structure with respect to each other, a flexible display including a first display region and a second display region distinguished by the first housing and the second housing that are able to overlap with each other, and a processor disposed in the housing, wherein the processor is configured to, in a state where the flexible display is at least partially folded, obtain a folding angle of the flexible display, and based on the folding angle of the flexible display and eye position information on a user, adjust a luminance of at least one display region among the first display region and the second display region.

According to various embodiments, an operation method of an electronic device may include, in a state where a flexible display is at least partially folded, the flexible display including a first display region and a second display region distinguished by a first housing and a second housing configured to rotate about a hinge structure with respect to each other to overlap with each other, obtaining a folding angle of the flexible display, and based on the folding angle of the flexible display and eye position information on a user, adjusting a luminance of at least one display region among the first display region and the second display region.

According to various embodiments, in a storage medium in which instructions are stored, the instructions being configured to cause, when executed by at least one processor, the at least one processor to perform at least one operation, the at least one operation may include, in a state where a flexible display is at least partially folded, the flexible display including a first display region and a second display region distinguished by a first housing and a second housing configured to rotate about a hinge structure with respect to each other to overlap with each other, obtaining a folding angle of the flexible display, and based on the folding angle of the flexible display and eye position information on a user, adjusting a luminance of at least one display region among the first display region and the second display region.

### [Advantageous Effects]

According to an embodiment, an electronic device may apply different driving voltages to regions based on a folding axis of a flexible display to correct the luminance difference between two regions, thereby increasing visibility.

Effects acquired by the disclosure are not limited to the effects described above, and other effects that have not been mentioned may be clearly understood by a person who has common knowledge in the technical field to which the disclosure belongs, from the following description.

### [Brief Description of Drawings]

FIG. 1 is a block diagram of an electronic device in a network environment according to various embodiments;
FIG. 2A is a diagram illustrating an unfolded state of an electronic device according to various embodiments;
FIG. 2B is a diagram illustrating a folded state of an electronic device according to various embodiments;
FIG. 2C is a diagram illustrating a partially folded state of an electronic device according to various embodiments;
FIG. 3A is a diagram of an example illustrating a case where brightness looks different according to a view angle in a partially folded state of an electronic device according to various embodiments;
FIG. 3B is a diagram of an example illustrating a case where brightness looks different according to a view angle in a partially folded state of an electronic device according to various embodiments;
FIG. 4 is an internal block diagram of an electronic device including a flexible display having a stacked structure according to various embodiments;
FIG. 5 is a diagram of an example illustrating calculation of a view angle according to a user's eye position, based on a side surface of an electronic device according to various embodiments;
FIG. 6 is a diagram of an example illustrating calculation of a view angle according to an eye position on a flexible display, based on a front surface of an electronic device according to various embodiments;
FIG. 7 is a flowchart illustrating an operation method of an electronic device according to various embodiments;
FIG. 8 is a diagram of an example illustrating a luminance adjustment process according to various embodiments;
FIG. 9 is a flowchart illustrating an operation method of an electronic device for luminance adjustment for each display region according to various embodiments;
FIG. 10A is a block diagram illustrating a method of supplying the same voltage to a display panel in an unfolded state according to various embodiments;
FIG. 10B is a block diagram illustrating a method of supplying different voltages to display regions in a partially folded state according to various embodiments;
FIG. 11A is a block diagram illustrating a method of supplying the same voltage to a display panel in an unfolded state according to various embodiments;
FIG. 11B is a block diagram illustrating a method of supplying different voltages to display regions in a partially folded state according to various embodiments;
FIG. 12 is a diagram illustrating a user interface screen, the luminance of which has been adjusted in a partially folded state according to various embodiments; and
FIG. 13 is a diagram illustrating a user interface screen for adjusting luminance in a partially folded state according to various embodiments.

### [Mode for Carrying out the Invention]

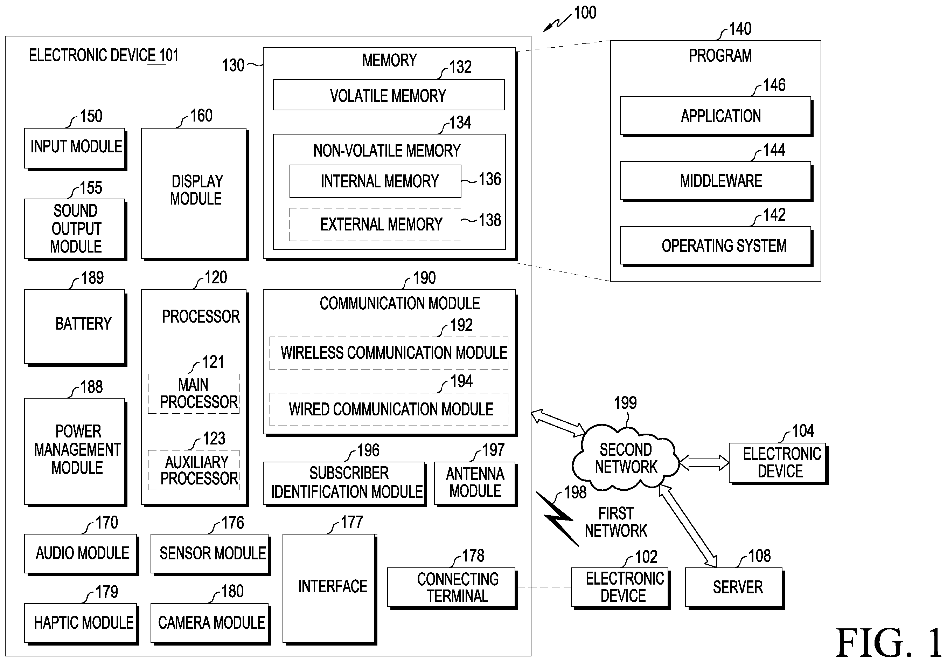

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

A first surface 210a may face a third surface 220a in a folded state using a folding manner.

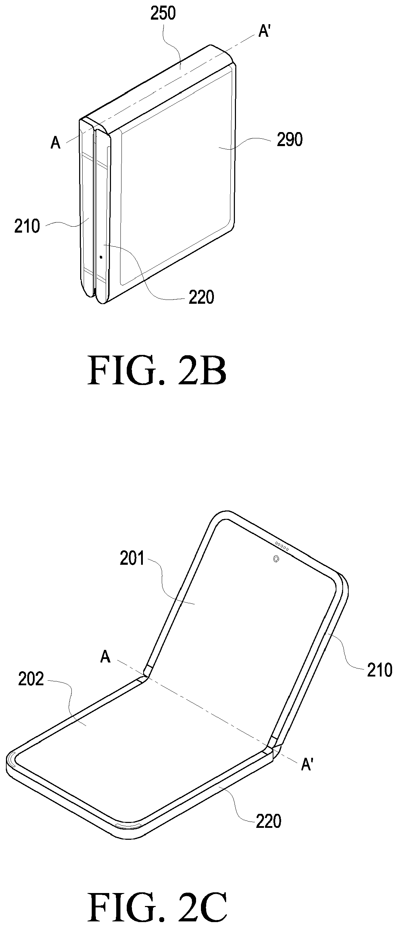

FIG. 2C shows an intermediate state where the electronic device 101 is partially unfolded based on a folding axis. As illustrated in FIG. 2C, the electronic device 101 may have a state where a second housing structure 220 is in contact with a contact surface (e.g., a floor or a table) and a first housing structure 210 is erected with respect to the contact surface.

As described above, an electronic device including a flexible display may be folded or bended with respect to one axis. The one axis may be pre-configured or be random. The pre-configured axis may imply that only a particular region (e.g., a partial region including the axis) of the flexible display of the electronic device is able to be curved. On the other hand, the random axis may imply that the entire region of the display of the electronic device is able to be curved. In FIG. 2C, the electronic device has been illustrated as being folded in half with respect to an axis passing through the center thereof, but a person who skilled in the art may easily understand that there is no limit to the position of the axis.

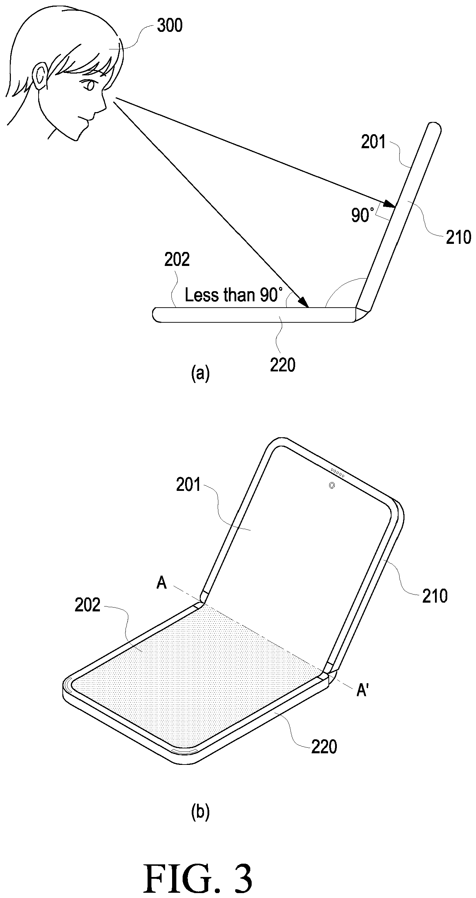

FIG. 3A and FIG. 3B are diagrams of an example illustrating a case where brightness looks different according to a view angle in a partially folded state of an electronic device according to various embodiments.

As illustrated in FIG. 3A, in an intermediate state where the electronic device 101 is partially folded (or partially unfolded) based on a folding axis, the second housing structure 220 of the electronic device 101 may be in contact with a contact surface (e.g., a floor or a table) and the first housing structure 210 may be erected with respect to the contact surface. According to an embodiment, in a case where a user 300 looks at a first display region 201 corresponding to an upper side with respect to the folding axis in a partially folded state of the electronic device 101, the same voltage is supplied to a display panel including the first display region 201 and a second display region 202, but luminance and chrominance look different due to the vision difference of the user between the first display region 201 and the second display region 202. Normally, measurement and calculation of the luminance of a display are based on an unfolded state. However, luminance is adjustable by a user, and may be automatically adjusted according to ambient brightness by means of light sensor. However, in a case of the electronic device 101 including a foldable display, the vision difference of a user between display regions (or display surfaces) vertically distinguished with respect to the folding axis may cause the luminance difference between the display regions, as illustrated in FIG. 3B, in a partially folded state, for example, between 90 degrees and 120 degrees, as well as an unfolded state.

Referring to FIG. 3A, when a view angle of the user for the first display region 201 (e.g., an upper display region) is, for example, 90 degrees, a view angle of the user for the second display region 202 (e.g., a lower display part) may be smaller than 90 degrees. In this case, the second display region 202 may be seen darker than the first display region 201 to the user in a partially folded state as illustrated in FIG. 3B.

Therefore, correction of the luminance and chrominance between the first display region 201 and the second display region 202 is required. According to various embodiments, different driving voltages may be applied to respective regions based on the folding axis of the flexible display in consideration of the user's eye position and a folding angle. Therefore, it is possible for the user to see a uniform screen regardless of the user's eye position in a partially folded state, and thus visibility may be increased.

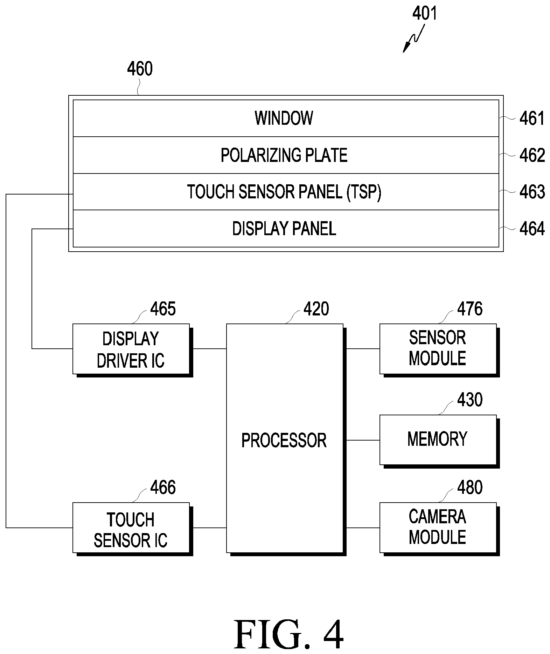

FIG. 4 is an internal block diagram of an electronic device including a flexible display having a stacked structure according to various embodiments.

Referring to FIG. 4, an electronic device 401 (e.g., the electronic device 101 in FIG. 1) may include at least one processor 420, a memory 430, a display driver IC 465, a touch sensor IC 4666, a sensor module 476, and/or a camera module 480. In addition, a flexible display 460 of the electronic device 401 may have a stacked structure as illustrated in FIG. 4. According to an embodiment, the flexible display 460 may include a window 461, a polarizing plate (polarizer) 462, a touch sensor panel (TSP) 463, and/or a display panel 464. As illustrated in FIG. 4, according to implementation, the touch sensor panel 463 may be positioned at an upper side of the display panel 464, an optical layer may be included to be disposed on the touch sensor panel 463, and the optical layer may include the polarizing plate 462. As another example, the touch sensor panel 463 may be positioned at an upper side of the polarizing plate 462.

First, the display driver IC (DDI) 465 may, for example, receive, via an interface module, image data or image information including an image control signal corresponding to a command for controlling the image data from the processor 420 (e.g., the main processor 121 (e.g., an application processor) in FIG. 1 or the auxiliary processor 123 operated independently to the function of the main processor 121). In addition, the display driver IC 465 may store at least a part of the received image information in the memory 430, for example, in a unit of frames. The display driver IC 465 may, for example, pre-process or post-process (e.g., resolution, brightness, or size adjustment) at least a part of the image data, at least based on a characteristic of the image data or a characteristic of the display 460.

According to various embodiments, the touch sensor IC 466 may control the touch sensor panel 463 to, for example, measure the change in a signal (capacitance) related to a designated position on the flexible display 460 so as to detect a touch input or a hovering input on the designated position and provide information (e.g., position, area, pressure, or time) on the detected touch input or hovering input to the processor 420.

According to various embodiments, the display panel 464 may include an element for displaying a screen, and the window 461 may be made of a transparent material. According to an embodiment, the window 461 may include a flexible window.

According to an embodiment, the electronic device 401 may further include at least one sensor of the sensor module 476 or a control circuit for the sensor. According to an embodiment, the sensor module 476 may include an illuminance sensor, and a gyro sensor and an acceleration sensor used to measure the horizontality and direction of the electronic device 401. According to an embodiment, the sensor module 476 may include a sensor (e.g., a digital Hall sensor and a 6-axis sensor) for determining an operation state (e.g., an unfolded state, a folded state, and/or an intermediate state) and a folding angle of the electronic device 401. Other than the above sensors, the sensor module 476 may include a strain sensor that outputs a strain value used to indirectly measure a folding angle of the electronic device 401.

According to various embodiments, the electronic device 401 may include the camera module 480, and an operation of capturing a facial image including a user's eye may be activated based on detection of an event of changing an operation state of the electronic device 401. For example, the processor 420 may activate the camera module 480 in response to detection of a change of an operation state (e.g., an unfolded state, a folded state, and/or a partially folded intermediate state), and obtain a facial image of a user according to a predetermined period. According to an embodiment, the processor 420 may continuously capture a facial image via the camera module 480 during execution of an application, and obtain eye position information on the user through analysis of the facial image.

According to various embodiments, the memory 430 may store a table in which a voltage adjustment rate is configured for each view angle. According to an embodiment, the table may include mapped voltage values for determining how much luminance of a display region (e.g., the second display region 202) disposed below a folded surface (or folding axis) using a hinge structure is to be adjusted, based on a folding angle of the flexible display 460 and eye position information on a user.

For example, Table 1 below shows an example of voltages to be supplied through a wire connected to multiple pixels included in the second display region 202, to correspond to view angles for the second display region 202 with respect to the folding axis.

**[Table 11**

| View angle | ELV_{DD} | ELVss |
|---|---|---|
| 90° | Default Value | Default Value |
| 95° | + 0.1V | - 0.1V |
| 100° | + 0.2V | - 0.2V |
| 105° | + 0.3V | - 0.3V |
| 110° | + 0.4V | - 0.4V |
| ... | ... | ... |
| 165° | +1.5V | -1.5V |
| 170° | +1.6V | -1.6V |
| 175° | +1.7V | -1.7V |
| 180° | +1.8V | -1.8V |

According to Table 1 above, the processor 420 may increase power as a view angle for the second display region 202 gets larger, thereby increasing the luminance of the second display region 202. For example, the processor 420 may refer to the table to adjust one of electro luminescence voltage drain-to-drain (ELVdd) or electro luminescence voltage source-to-source (ELVss), thereby adjusting the luminance of the second display region 202. As described above, the processor 420 may refer to the table to adjust the luminance of the second display region 202, but this merely corresponds to an example, and the disclosure is not limited thereto. For example, a maximum luminance and a default luminance of the electronic device 401 vary depending on various conditions as well as an organic material, and thus a voltage value corresponding to a view angle in the table may be adjustable.

According to various embodiments, the processor 420 may detect a physical state and/or a physical state change of the electronic device 401, based on data received from the sensor module 476. For example, the processor 420 may determine (or calculate) the angle between a first surface of the first housing structure 210 of the electronic device 401 and a first surface of the second housing structure 220, based on at least one of an angle sensor, a strain sensor, a distance sensor, or a gyroscope sensor included in the electronic device 401.

According to various embodiments, the processor 420 may determine which range the angle between the first surface of the first housing structure 210 and the first surface of the second housing structure 220 corresponds to, the range being one of a designated first angle range (e.g., a range greater than about 90 degrees and equal to or smaller than about 120 degrees), a designated second angle range (e.g., a range equal to or greater than about 0 degrees and smaller than about 20 degrees), and a designated third angle range (e.g., a range greater than about 120 degrees and equal to or smaller than about 180 degrees). For example, in a case where the angle between the first surface of the first housing structure 210 and the first surface of the second housing structure 220 corresponds to the designated first angle range, the processor 420 may determine that the electronic device 101 is in a partially unfolded (or partially folded) state.

According to various embodiments, the processor 420 may detect (e.g., a folding event or an unfolding event) a change of an operation state (e.g., an unfolded state, a folded state, and/or a partially folded intermediate state). For example, whether folding or unfolding has been done may be determined based on a sensor capable of detecting a change of an operation state, and a folding angle of the flexible display 460 corresponding to the operation state may be obtained.

According to various embodiments, the processor 420 may determine whether to operate the camera module 480, based on an application attribute. For example, a user may be unable to feel luminance difference with respect to dark colors with eyes, and thus a luminance adjustment function may not be performed when an application using black as a background color is executed. On the other hand, the processor 420 may operate the camera module 480 and perform an operation of obtaining eye position information for luminance adjustment in a case of an application, including Internet, requiring luminance adjustment.

According to various embodiments, in a case of an application requiring luminance adjustment, the processor 420 may automatically adjust the luminance of a lower execution screen during execution of the application, based on a folding angle and a user's eye position information in response to a change of an operation state.

According to an embodiment, in a case of an application, such as Internet, using white as a background color, when a change of an operation state is detected during execution of the application, the processor 420 may adjust the luminance of a display region corresponding to a lower side being in contact with a contact surface (e.g., a floor or a table) with respect to the folding axis.

According to an embodiment, the processor 420 may execute an application in response to an application execution request made by a user after a change of an operation state is detected. According to an embodiment, the processor 420 may increase the frequency (or a period or the number of times) of acquisition of eye position information from a facial image obtained via the camera module 480, according to an attribute of an application in a partially folded state. For example, in a case where a background color in which an application requiring luminance adjustment is executed is white, a user may feel a larger luminance difference between the upper and lower display regions. Therefore, the processor 420 may increase the frequency of acquisition of the eye position information, based on the attribute of the application, thereby increasing the number of times of an operation of correcting the luminance difference.

According to an embodiment, the processor 420 may increase, based on an application attribute, the frequency of an operation of calculating a view angle for a display region (e.g., the second display region) corresponding to a lower side according to a folding angle of the flexible display 460 and eye position information on a user during execution of the application. Accordingly, the processor 420 may quickly correct the luminance of a display region corresponding to the lower side being in contact, during execution of the application. Therefore, it is possible for a user to see a uniform execution screen having no distinction between upper and lower display regions through luminance correction with an increased operation frequency.

As described above, in order to correct the luminance difference between display regions, caused by a view angle at which a user views, the processor 420 may calculate a view angle for a display region corresponding to a lower side being in contact, based on a folding angle and eye position information on the user.

According to an embodiment, the processor 420 may adjust a voltage supplied to multiple pixels included in the display region corresponding to the lower side by referring to a table in which a voltage adjustment rate indicating how much luminance is to be adjusted is configured according to the calculated view angle. According to an embodiment, the processor 420 may control a driving voltage to be different for each display region, thereby correcting the luminance difference between the display regions. For example, the processor 420 may adjust a voltage supplied to the lower display part, thereby correcting a luminance difference from a display region corresponding to the upper side in a state where the display is erected with respect to a contact surface. Accordingly, according to various embodiments, the luminance difference between upper and lower display regions may be reduced, and thus user visibility may be improved.

According to various embodiments, an electronic device may include a housing (e.g., the foldable housing 230) including a first housing (e.g., the first housing structure 210) and a second housing (e.g., the second housing structure 220) configured to rotate about a hinge structure with respect to each other, the flexible display 460 including the first display region 201 and the second display region 202 distinguished by the first housing and the second housing that are able to overlap with each other, and the processor 420 disposed in the housing, wherein the processor 420 is configured to, in a state where the flexible display 460 is at least partially folded, obtain a folding angle of the flexible display 460, and based on the folding angle of the flexible display 460 and eye position information on a user, adjust a luminance of at least one display region among the first display region 201 and the second display region 202.

According to various embodiments, the flexible display 460 may be configured to include a first wire for supplying power to multiple first pixels included in the first display region 201 and a second wire for supplying power to multiple second pixels included in the second display region 202 during execution of an application.

According to various embodiments, the processor 420 may be configured to supply different voltages through the first wire and the second wire, respectively, based on the folding angle of the flexible display 460 and the eye position information on the user, and supply an identical voltage through the first wire and the second wire in a state where the flexible display 460 is unfolded.

According to various embodiments, the processor 420 may be configured to adjust one of electro luminescence voltage drain-to-drain (ELVdd) or electro luminescence voltage source-to-source (ELVss) through each of the first wire and the second wire, thereby adjusting the luminance of the at least one display region.

According to various embodiments, the processor 420 may be configured to, in a state where the flexible display 460 is at least partially folded, identify an attribute of an application to be executed, and identify whether to adjust the luminance of the at least one display region, based on the attribute of the application.

According to various embodiments, the processor 420 may be configured to identify whether the application is an application requiring luminance adjustment, based on the attribute of the application, and in case that the application is the application requiring luminance adjustment, adjust the luminance of the at least one display region.

According to various embodiments, the processor 420 may be configured to adjust a luminance of the second display region 202 disposed at a lower side with respect to a surface folded through the hinge structure.

According to various embodiments, the electronic device 401 may further include the camera module 480 configured to obtain a facial image of the user, wherein the processor 420 is configured to obtain eye position information on the user from the facial image according to a predetermined period during execution of the application, and adjust the luminance of the second display region 202, based on the obtained eye position information.

According to various embodiments, the processor 420 may be configured to calculate a view angle for the second display region 202, based on the folding angle of the flexible display and the eye position information on the user and refer to a table having a voltage adjustment rate configured according to a view angle for the second display region 202 to supply a voltage corresponding to the calculated view angle for the second display region 202 through the second wire.

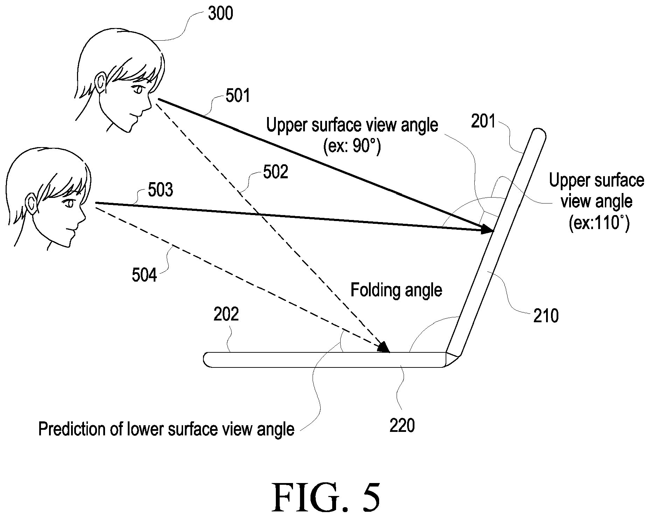

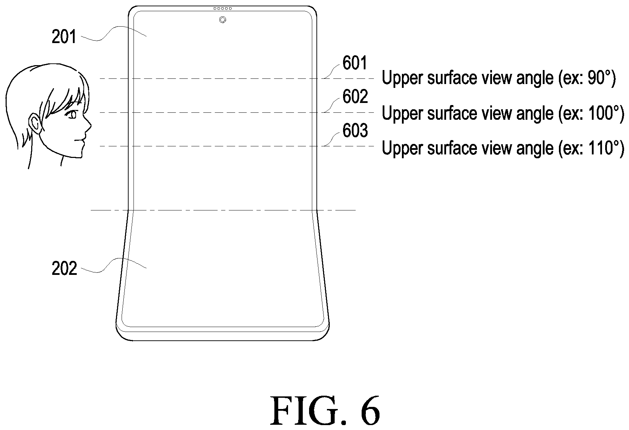

FIG. 5 is a diagram of an example illustrating calculation of a view angle according to a user's eye position, based on a side surface of an electronic device according to various embodiments. FIG. 6 is a diagram of an example illustrating calculation of a view angle according to an eye position on a flexible display, based on a front surface of an electronic device according to various embodiments.

Referring to FIG. 5 and FIG. 6, in a case where the user 300 views the first display region 201 corresponding to an upper side with respect to the folding axis in a partially folded state, the electronic device 401 may obtain a facial image via a front camera (e.g., the camera module 480) disposed on the first housing structure 210. The electronic device 401 may detect the user's eye position, based on the facial image, and accordingly, may obtain a view angle (e.g., an upper surface view angle) between the first display region 201 corresponding to the upper side and the user's eye position. The electronic device 401 may determine (or calculate) the angle (e.g., a folding angle) between the first surface of the first housing structure 210 of the electronic device 401 and the first surface of the second housing structure 220, based on at least one of a digital Hall sensor, an angle sensor, a strain sensor, a distance sensor, or a gyroscope sensor. The electronic device 401 may predict (or calculate) a view angle for the second display region 202 corresponding to the lower side when the folding angle and the upper surface view angle are obtained. According to various embodiments, the electronic device 401 may detect the position of the user's eyebrow, forehead, nose, and/or mouth, based on the facial image, and accordingly, may obtain a view angle (e.g., an upper surface view angle) between the first display region 201 corresponding to the upper side with respect to the folding axis and the position of the user's eyebrow, forehead, nose, and/or mouth.

Referring to FIG. 5, when a view angle (e.g., an upper surface view angle) 501 of the user for the first display region 201 (e.g., an upper display part) is, for example, 90 degrees, a view angle (e.g., a lower surface view angle) 502 of the user for the second display region 202 (e.g., a lower display part) may be smaller than 90 degrees. On the other hand, when a view angle (e.g., an upper surface view angle) 503 of the user for the first display region 201 (e.g., the upper display region) is, for example, 110 degrees, a view angle (e.g., a lower surface view angle) 504 of the user for the second display region 202 (e.g., the lower display part) may be an angle smaller than 90 degrees, the angle being smaller than that of a case where the upper surface view angle is 90 degrees. As described above, the electronic device 401 may calculate a view angle (e.g., a lower surface view angle) for the lower display part, based on a folding angle and an eye position for the upper display part, that is, an upper surface view angle.

As illustrated in FIG. 6, based on a front surface of the electronic device, a user's view angle (e.g., an upper surface view angle) (e.g., 90 degrees, 100 degrees, and 110 degrees) for the first display region 201 (e.g., the upper display part) may be identified for eye positions 601, 602, and 603.

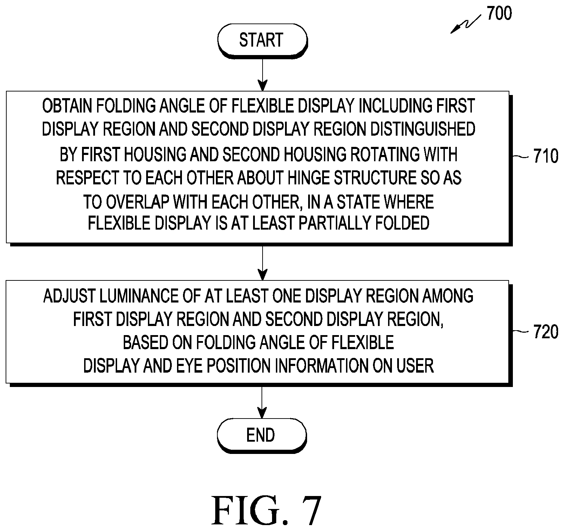

FIG. 7 is a flowchart 700 illustrating an operation method of an electronic device according to various embodiments.

Each state/operation of the operation method illustrated in FIG. 7 may be performed by at least one of an electronic device (e.g., the electronic device 101 in FIG. 1 and the electronic device 401 in FIG. 4) and at least one processor (e.g., the processor 120 in FIG. 1 and the processor 420 in FIG. 4) of the electronic device.

Referring to FIG. 7, in operation 710, the electronic device 401 (e.g., the processor 420 in FIG. 4) may obtain a folding angle of a flexible display including a first display region and a second display region distinguished by a first housing (e.g., the first housing structure 210) and a second housing (e.g., the second housing structure 220) rotating with respect to each other about a hinge structure so as to overlap with each other, in a state where the flexible display has been at least partially folded.

In operation 720, the electronic device 401 may adjust the luminance of at least one display region among the first display region and the second display region, based on the folding angle of the flexible display and eye position information on a user.

According to various embodiments, the adjusting of the luminance of the at least one display region may include supplying different voltages through a first wire for supplying power, respectively, to multiple first pixels included in the first display region and a second wire for supplying power to multiple second pixels included in the second display region during execution of an application,.

According to various embodiments, the method may further include supplying an identical voltage through the first wire and the second wire in a state where the flexible display is unfolded.

According to various embodiments, the method may further include, in a state where the flexible display is at least partially folded, identifying an attribute of an application to be executed, and identifying whether to adjust the luminance of the at least one display region, based on the attribute of the application.

According to various embodiments, the adjusting of the luminance of the at least one display region may include identifying whether the application is an application requiring luminance adjustment, based on the attribute of the application, and in case that the application is the application requiring luminance adjustment, adjusting the luminance of the at least one display region.

According to various embodiments, the adjusting of the luminance of the at least one display region may include adjusting a luminance of the second display region disposed at a lower side with respect to a surface folded through the hinge structure.

According to various embodiments, the adjusting of the luminance of the second display region may include obtaining a facial image of the user during execution of the application, obtaining eye position information on the user from the facial image according to a predetermined period, and adjusting the luminance of the second display region, based on the obtained eye position information.

According to various embodiments, the adjusting of the luminance of the at least one display region may include calculating a view angle for the second display region, based on the folding angle of the flexible display and the eye position information on the user, and referring to a table having a voltage adjustment rate configured according to a view angle for the second display region to supply a voltage corresponding to the calculated view angle for the second display region through the second wire.

According to various embodiments, the adjusting of the luminance of the at least one display region may include referring to the table to increase a voltage supplied through the second wire according to an increase of the view angle for the second display region, thereby increasing the luminance of the second display region.

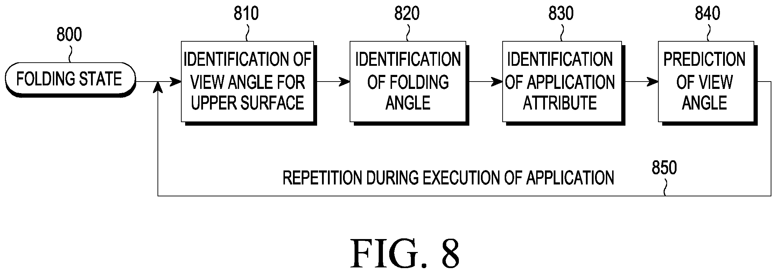

FIG. 8 is a diagram of an example illustrating a luminance adjustment process according to various embodiments.

Referring to FIG. 8, the electronic device 401 may perform, during execution of an application in a folding state 800, repetition 850 of at least one of identification 810 of a view angle for an upper surface (e.g., the first display region 201), identification 820 of a folding angle, identification 830 of an application attribute, and prediction 840 of a view angle.

According to an embodiment, the folding state 800 may be a partially unfolded (or partially folded) intermediate state where the angle between the first surface of the first housing structure 210 and the first surface of the second housing structure 220 corresponds to the designated first angle range. The electronic device 401 may determine whether the flexible display 460 has been at least partially folded, in response to a change of an operation state, and detect the angle between the first housing structure 210 and the second housing structure 220.

According to an embodiment, in a case of the folding state 800, the electronic device 401 may detect an eye position, based on an image obtained via the front camera, and identify a view angle for the upper surface according to the eye position. According to an embodiment, a pupil included in a captured image of a user's face may be used as a reference point for determining an eye position and a direction in which the user views a display screen. For example, the electronic device 401 may analyze the user's pupil direction and the user's position from a captured image of the user's face, to determine, for example, which part of the display screen of FIG. 6 the user is looking at. The view angle may indicate which part of the screen on which the user's gaze having a relative position for the first display region 201 distinguished with respect to the folding axis in a partially folded state is positioned.

According to an embodiment, the electronic device 401 may perform identification 820 of a folding angle, based on at least one sensor, such as a digital Hall sensor, an angle sensor, a strain sensor, a distance sensor, or a gyroscope sensor.

According to an embodiment, the electronic device 401 may perform identification 830 of an attribute (or metadata) of at least one application being executed or an application selected by the user in the folding state. According to an embodiment, the electronic device 401 may determine, based on the attribute of the application being executed, whether the application supports automatic luminance adjustment, and may determine whether the application is an application requiring adjustment of the frequency (or period) of an operation of identifying a view angle according to an eye position. For example, in a case where the application is an application using white as a background color, based on the attribute of the application, the electronic device 401 may increase the frequency of the operation of identifying a view angle according to an eye position so as to quickly correct the difference between the upper and lower display parts in real time.

According to an embodiment, the electronic device 401 may predict (or calculate) a view angle for the second display region 202, based on the folding angle and eye position information on the user.

According to an embodiment, the electronic device 401 may perform repetition 850 of operations 9810, 820, 830, 830, and 840 in the folding state 800 according to a predetermined period during execution of the application.

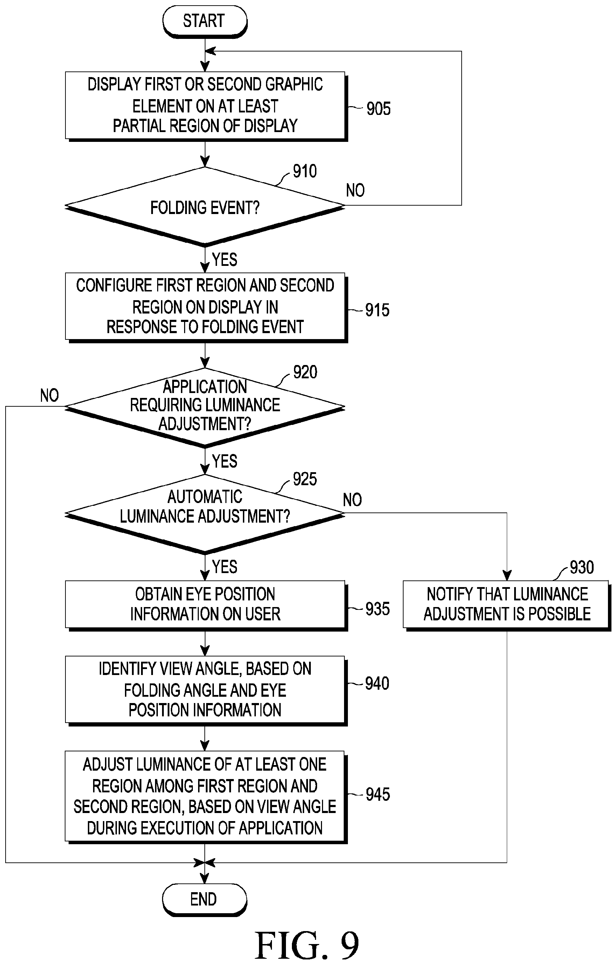

FIG. 9 is a flowchart illustrating an operation method of an electronic device for luminance adjustment for each display region according to various embodiments.

Each state/operation of the operation method illustrated in FIG. 9 may be performed by at least one of an electronic device (e.g., the electronic device 101 in FIG. 1) and at least one processor (e.g., the processor 120 in FIG. 1 and the processor 420 in FIG. 4) of the electronic device. In an embodiment, at least one of operation 905 to operation 945 may be omitted, the order of some operations may be changed, or other operations may be added. In addition, in an embodiment below, operations may be sequentially performed, but sequential performance is not necessarily required. For example, the sequence of operations may be changed, and at least two operations may be performed in parallel.

Referring to FIG. 9, the electronic device 401 may, in operation 905, display a first or second graphic element on at least a partial region of a display. For example, the electronic device 401 may display a first graphic element related to a first application on at least a partial region (or the entire screen) of a flexible display. Alternatively, in a case where multiple applications are being executed, the electronic device may display a first graphic element related to a first application and a second graphic element related to a second application. For example, the electronic device 401 may display, in a region of the flexible display as the first graphic element, the first application or a screen generated by execution thereof, a screen/graphic interface of the first application, or an image/document/text/video reproduced/displayed by the first application.

In operation 910, the electronic device 401 may detect a folding event, and in operation 915, the electronic device 401 may configure a first region and a second region on the display in response to the folding event. For example, the electronic device 401 may divide at least a partial region of the flexible display into a first region (e.g., the first display region 201) and a second region (e.g., the second display region 202). For example, the folding event may include a folding/bending input of folding or bending the electronic device.

In operation 920, the electronic device 401 may identify whether the application is an application requiring luminance adjustment. According to an embodiment, the electronic device 401 may identify whether the application is an application requiring luminance adjustment, based on an attribute of the application. For example, in a case of a camera application using black as a background color, a user is unable to feel a luminance difference between two regions (e.g., the first display region 201 and the second display region 202) with eyes, and there may be no need to adjust luminance. Therefore, the electronic device 401 may not perform a luminance adjustment function at the time of execution of an application that is not an application requiring luminance adjustment. For example, at the time of an operation of an application using a black background, the electronic device 401 may automatically adjust luminance only once at the first time, or restrict a luminance adjustment function.

On the other hand, in operation 925, the electronic device 401 may identify whether automatic luminance adjustment is possible, in a case where the application is an application requiring luminance adjustment. For example, an application, such as Internet, using white as a background color may correspond to an application requiring luminance adjustment. If the application corresponds to an application requiring luminance adjustment, the electronic device 404 may identify whether automatic luminance adjustment is possible. For example, in a case where a user configures manual adjustment of luminance for each folding angle, the electronic device 401 may not be able to perform automatic luminance adjustment.

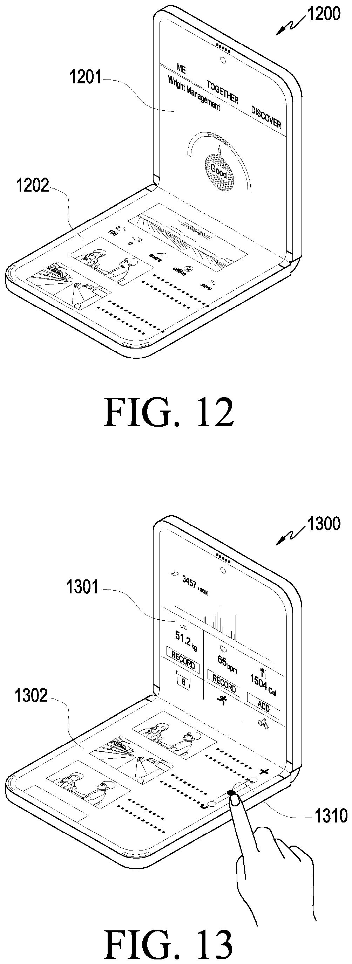

Therefore, in a case where automatic luminance adjustment is not possible, the electronic device 401 may, in operation 930, notify that luminance adjustment by a user is possible. For example, as illustrated in FIG. 13, a user may adjust luminance through a guide enabling luminance adjustment for at least one display region.

On the other hand, in a case where automatic luminance adjustment is possible, the electronic device 401 may, in operation 935, obtain eye position information on the user. In operation 940, the electronic device may identify a view angle (e.g., a view angle for the second display region 202), based on a folding angle and the eye position information. According to an embodiment, the electronic device 401 may perform an operation of identifying a view angle periodically or at a frequency determined according to an attribute of the application during execution of the application.

In operation 945, the electronic device 401 may adjust the luminance of at least one region among the first region and the second region, based on the view angle during execution of the application. According to an embodiment, the electronic device 401 may continuously calculate a view angle for the second display region 202 at regular intervals during execution of the application, and increase the luminance of the second display region 202 to correspond to the calculated view angle. Accordingly, the luminance difference between the first display region 201 and the second display region 202 may be reduced.

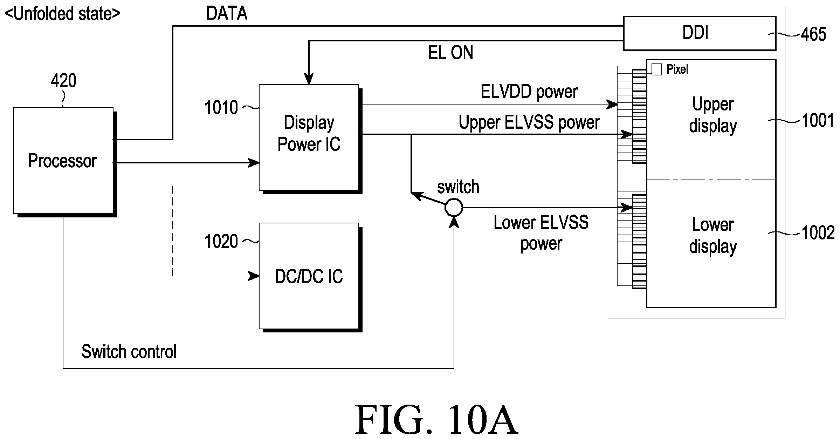

According to various embodiments, so as to reduce the luminance difference between the first display region 201 and the second display region 202, control of the first display region 201 and control of the second display region 202 may be separated, and one of ELVdd power or ELVss power of the flexible display may be implemented to be separable through a switching structure. This will be specifically described with reference to FIG. 10A to FIG. 11B.

FIG. 10A is a block diagram illustrating a method of supplying the same voltage to a display panel in an unfolded state according to various embodiments.

Referring to FIG. 10A, in an unfolded state, a flexible display including an upper display 1001 (e.g., a first display region) and a lower display 1002 (e.g., a second display region) may be supplied with one of electro luminescence voltage drain-to-drain (ELVdd) power or electro luminescence voltage source-to-source (ELVss) via a display power IC 1010.

According to an embodiment, a display driver IC (e.g., the display driver IC 465 in FIG. 4) (hereinafter, DDI) may receive a control signal and image data from the processor 420, and drive each pixel of a panel. For example, the upper display 1001 and the lower display 1002 may be connected to one DDI 465.

According to an embodiment, in an unfolded state, the same voltage may be supplied to the upper display 1001 and the lower display 1002 through the display power IC 1010. For example, in a case of using ELVss power, the same ELVss power may be applied to the upper display 1001 and the lower display 1002 through switching control. Accordingly, in the unfolded state, application execution screens having the same luminance may be output in at least a partial region (e.g., the entire screen) of the flexible display including the first display region 201 and the second display region 202.

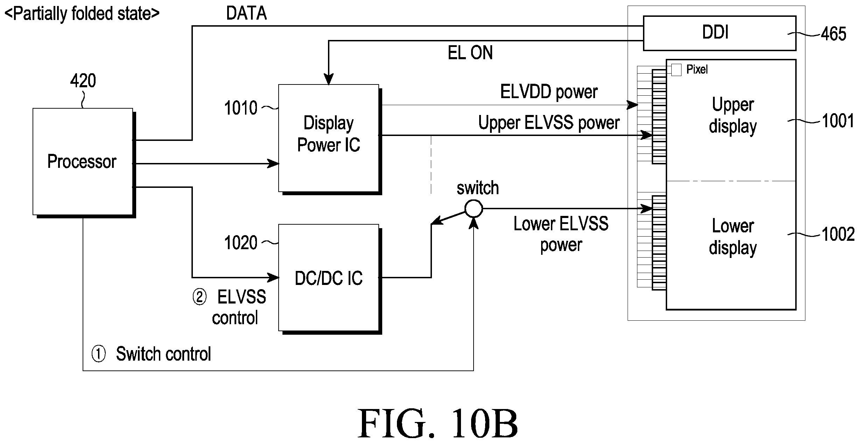

FIG. 10B is a block diagram illustrating a method of supplying different voltages to display regions in a partially folded state according to various embodiments.

As illustrated in FIG. 10B, a flexible display may be configured to include a first wire (or a first line) for supplying power to multiple first pixels included in the upper display 1001 (e.g., the first display region 201), and a second wire (or a second line) for supplying power to multiple second pixels included in the lower display 1002 (e.g., the second display region 202).

Referring to FIG. 10B, the processor 420 may change a second wire path for the lower display 1002 through switching control when a change (e.g., a partially folded state) of an operation state is detected. For example, the processor 420 may control to be connected to a DC/DC IC 1020 to enable an adjusted voltage to be supplied through the second wire for the lower display 1002. For example, the processor 420 may perform switching to connect the second wire for the lower display 1002 to an output node of the DC/DC IC 1020. According to an embodiment, the processor 420 may calculate a view angle for the lower display 1002, based on a folding angle of the flexible display and eye position information on a user. According to an embodiment, the processor 420 may control the voltage supplied through the second wire for the lower display 1002, based on the calculated view angle.

As illustrated in FIG. 10B, the flexible display panel may be divided into an upper part and a lower part with respect to a folding axis, and separate wires may be arranged for the displays 1001 and 1002, respectively.

According to an embodiment, the processor 420 may adjust one of electro luminescence voltage drain-to-drain (ELVdd) or electro luminescence voltage source-to-source (ELVss) through each of the first wire and the second wire by controlling switching, thereby adjusting the luminance of at least one display region.

According to an embodiment, the electronic device 401 may further include a separate DC/DC converter (e.g., the DC/DC IC 1020) for supplying a different voltage to one of the displays 1001 and 1002. Accordingly, in an unfolded state, the same voltage may be supplied to the displays 1001 and 1002 by using one display power IC 1010 through switching, and when the unfolded state is changed to a partially folded state, the DC/DC IC 1020 may be connected to one of the displays 1001 and 1002 through switching control so as to control the luminance of the one region.

As illustrated in FIG. 10B, in a case of luminance control using ELVss, an ELVss circuit is required to be internally divided for the displays 1001 and 1002, and in a case of luminance control using ELVdd, an ELVdd circuit may be internally divided for the displays 1001 and 1002.

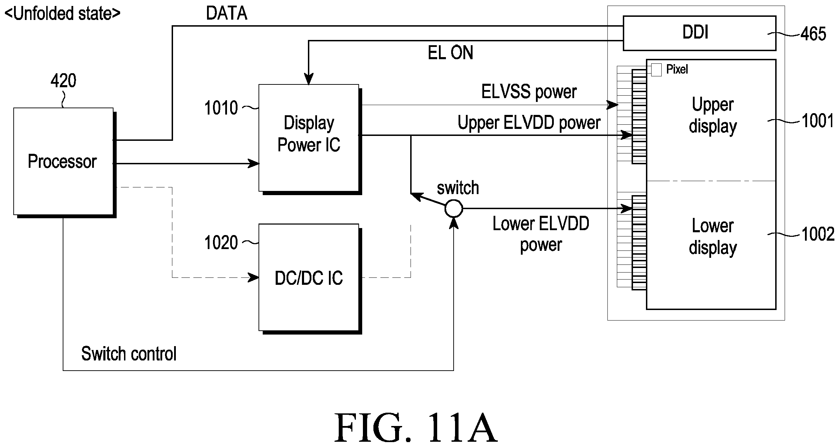

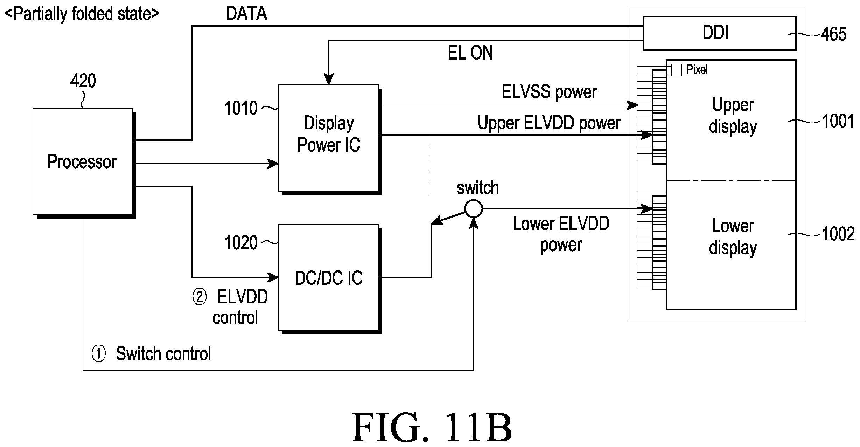

FIG. 11A and FIG. 11B show examples of luminance control using ELVdd for the displays 1001 and 1002.

FIG. 11A is a block diagram illustrating a method of supplying the same voltage to a display panel in an unfolded state according to various embodiments, and FIG. 11B is a block diagram illustrating a method of supplying different voltages to display regions in a partially folded state according to various embodiments.

Descriptions of FIG. 11A and FIG. 11B are the same as those of FIG. 10A and FIG. 10B in view of elements, respectively, and differ from FIG. 10A and FIG. 10B only in that ELVdd is used to control the luminance of each of the displays 1001 and 1002. Therefore, a specific description will be omitted.

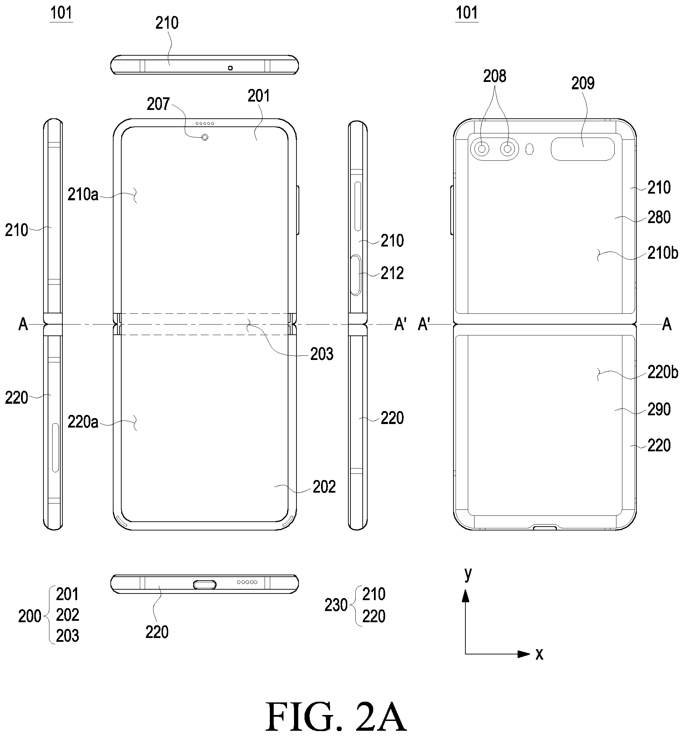

In a case where the electronic device 401 includes a sub display (e.g., a sub display 209 in FIG. 2A) disposed on a rear cover thereof, the electronic device may include a DC/DC IC for driving the sub display. The electronic device 401 including two or more displays as described above may be configured to drive the sub display by using the DC/DC IC for the sub display in a folded state, and when the folded state is changed to a partially folded state, change a power path to use the DC/DC IC for the sub display to supply power to the multiple second pixels included in the lower display 1002. That is, in a partially folded state, the DC/DC IC for the sub display may be used to supply ELVdd or ELVss to the lower display 1002.

FIG. 12 is a diagram illustrating a user interface screen, the luminance of which has been adjusted in a partially folded state according to various embodiments.

Referring to FIG. 12, an electronic device 1200 according to various embodiments may determine whether an application being executed supports automatic luminance adjustment, in response to a change of an operation state. The automatic luminance adjustment may correspond to a function by which the luminance of a lower execution screen is automatically adjusted during execution of the application, based on a folding angle and eye position information of a user in response to a change of an operation state. According to an embodiment, whether the application is an application requiring luminance adjustment may be recorded in an attribute (or metadata) of the application, and the electronic device 1200 may determine whether an application being executed supports automatic luminance adjustment, based on an attribute of the application.

According to various embodiments, in a case where the application being executed supports automatic luminance adjustment, the electronic device 1200 may change the voltage supplied to pixels corresponding to a second display region 1202, to a designated voltage to output an execution screen for which the luminance difference between a first display region 1201 and the second display region 1202 has been corrected according to the eye position of a user.

According to various embodiments, in a case where the application being executed does not support automatic luminance adjustment, an electronic device 1300 may provide a user luminance adjustment function as illustrated in FIG. 13.

FIG. 13 is a diagram illustrating a user interface screen for adjusting luminance in a partially folded state according to various embodiments.

Referring to FIG. 13, the electronic device 1300 may output an application execution screen to a first display region 1301 and a second display region 1302 in response to a change of an operation state. According to various embodiments, in a case where the application being executed does not support an automatic luminance adjustment function, a guide 1310 enabling luminance adjustment for at least one display region among the first display region 1301 and the second display region 1302 may be provided. For example, when an input, such as a touch and drag input, is detected while an application execution screen is displayed using the first display region 1301 and the second display region 1302 in a partially folded state, the electronic device 1300 may consider the input as a request for displaying a control interaction guide and display a guide 1310 for brightness adjustment.

In addition, according to various embodiments, in a case where there are multiple applications being executed, the electronic device 1300 may perform control such that different application execution screens are output in the first display region 1301 and the second display region 1302, respectively. In a case of multiple applications, the electronic device may provide a guide enabling luminance adjustment of each of the first display region 1301 and the second display region 1302. For example, a user may adjust, by him/herself, the luminance of a desired display region to correspond to a degree of a touch and drag input. The electronic device 1300 may reflect a voltage corresponding to the adjusted luminance on the table values of Table 1. For example, when a user manually adjusts luminance at a particular angle, the electronic device 1300 may map and store, in advance, a voltage corresponding to the luminance adjusted by the user at a particular angle. Accordingly, the electronic device 1300 may configure a voltage mapped for each folding angle as a default value for the second display region 1302.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a housing including a first housing and a second housing configured to rotate about a hinge structure with respect to each other;
a flexible display including a first display region and a second display region distinguished by the first housing and the second housing that are able to overlap with each other; and
a processor disposed in the housing,
wherein the processor is configured to:
in a state where the flexible display is at least partially folded, obtain a folding angle of the flexible display; and
based on the folding angle of the flexible display and eye position information on a user, adjust a luminance of at least one display region among the first display region and the second display region.

2. The electronic device of claim 1, wherein the flexible display is configured to include a first wire for supplying power to multiple first pixels included in the first display region and a second wire for supplying power to multiple second pixels included in the second display region.

3. The electronic device of claim 2, wherein the processor is configured to:
supply different voltages through the first wire and the second wire, respectively, based on the folding angle of the flexible display and the eye position information on the user during execution of an application; and
supply an identical voltage through the first wire and the second wire in a state where the flexible display is unfolded.

4. The electronic device of claim 3, wherein the processor is configured to adjust one of electro luminescence voltage drain-to-drain (ELVdd) or electro luminescence voltage source-to-source (ELVss) through each of the first wire and the second wire, thereby adjusting the luminance of the at least one display region.

5. The electronic device of claim 3, wherein the processor is configured to:
in a state where the flexible display is at least partially folded, identify an attribute of an application to be executed; and
identify whether to adjust the luminance of the at least one display region, based on the attribute of the application.

6. The electronic device of claim 5, wherein the processor is configured to:
identify whether the application is an application requiring luminance adjustment, based on the attribute of the application; and
in case that the application is the application requiring luminance adjustment, adjust the luminance of the at least one display region.

7. The electronic device of claim 2, wherein the processor is configured to adjust a luminance of the second display region disposed at a lower side with respect to a surface folded through the hinge structure.

8. The electronic device of claim 7, further comprising a camera module configured to obtain a facial image of the user,
wherein the processor is configured to obtain eye position information on the user from the facial image according to a predetermined period during execution of an application, and adjust the luminance of the second display region, based on the obtained eye position information.

9. The electronic device of claim 8, wherein the processor is configured to:
calculate a view angle for the second display region, based on the folding angle of the flexible display and the eye position information on the user; and
refer to a table having a voltage adjustment rate configured according to a view angle for the second display region to supply a voltage corresponding to the calculated view angle for the second display region through the second wire.

10. The electronic device of claim 9, wherein the processor is configured to refer to the table to increase the voltage supplied through the second wire according to an increase of the view angle for the second display region, thereby increasing the luminance of the second display region.

11. An operation method of an electronic device, the method comprising:
in a state where a flexible display is at least partially folded, the flexible display including a first display region and a second display region distinguished by a first housing and a second housing configured to rotate about a hinge structure with respect to each other to overlap with each other, obtaining a folding angle of the flexible display; and
based on the folding angle of the flexible display and eye position information on a user, adjusting a luminance of at least one display region among the first display region and the second display region.

12. The method of claim 11, wherein the adjusting of the luminance of the at least one display region comprises supplying different voltages through a first wire for supplying power, respectively, to multiple first pixels included in the first display region and a second wire for supplying power to multiple second pixels included in the second display region during execution of an application.

13. The method of claim 12, further comprising:
in a state where the flexible display is at least partially folded, identifying an attribute of an application to be executed;
identifying whether the application is an application requiring luminance adjustment, based on the attribute of the application; and
in case that the application is the application requiring luminance adjustment, adjusting the luminance of the at least one display region.

14. The method of claim 12, wherein the adjusting of the luminance of the at least one display region comprises:
calculating a view angle for the second display region, based on the folding angle of the flexible display and the eye position information on the user; and
referring to a table having a voltage adjustment rate configured according to a view angle for the second display region, to increase a voltage supplied through the second wire according to an increase of the view angle for the second display region, thereby increasing a luminance of the second display region.

15. A storage medium in which instructions are stored, the instructions being configured to cause, when executed by at least one processor, the at least one processor to perform at least one operation,
wherein the at least one operation comprises:
in a state where a flexible display is at least partially folded, the flexible display including a first display region and a second display region distinguished by a first housing and a second housing configured to rotate about a hinge structure with respect to each other to overlap with each other, obtaining a folding angle of the flexible display; and
based on the folding angle of the flexible display and eye position information on a user, adjusting a luminance of at least one display region among the first display region and the second display region.
